# FASCICULE DE BREVET EUROPEEN

(11) **EP 1 782 191 B1**
(45) Date de publication et mention de la délivrance du brevet: **01.08.2012**
(21) Numéro de dépôt: 05754522.0
(22) Date de dépôt: 07.06.2005
(51) Int. Cl.: G06F 9/445

(54) **PROCEDE DE CHARGEMENT D'UN LOGICIEL EN LANGAGE INTERMEDIAIRE ORIENTE OBJET DANS UN APPAREIL PORTATIF**
VERFAHREN ZUM LADEN VON SOFTWARE MIT EINER ZWISCHENGEORDNETEN OBJEKTORIENTIERTEN SPRACHE IN EIN TRAGBARES GERÄT
METHOD FOR LOADING SOFTWARE WITH AN INTERMEDIATE OBJECT ORIENTED LANGUAGE IN A PORTABLE DEVICE

(30) Priorité: 15.06.2004 FR 0406493
(43) Date de publication de la demande: 09.05.2007
(73) Titulaire: Gemalto SA, 92190 Meudon (FR)
(72) Inventeur: GRIMAUD, Gilles, F-59000 LILLE (FR); VANDEWALLE, Jean-Jacques, F-59260 LILLE-HELLEMMES (FR)
(86) Numéro de dépôt international: PCT/EP2005/052621
(87) Numéro de publication internationale: WO 2005/124544

(56) Documents cités:
- EP-A- 1 416 378
- WO-A-00/46666
- US-A1- 2003 005 020
- US-A1- 2004 015 935
- US-B1- 6 349 344
- LINDHOLM T ET AL: "THE JAVA TM VIRTUAL MACHINE SPECIFICATION, THE JAVA SERIES ... FROM THE SOURCE" JAVA TM VIRTUAL MACHINE SPECIFICATION, JAVA TM SERIES, READING, MA : ADDISON-WESLEY, US, 1997, pages 40-55,139, XP002252706 ISBN: 0-201-63452-X

## Description

La présente invention porte sur les logiciels et environnements d'exécution embarqués dans un appareil portatif et en particulier sur les procédés de chargement de tels logiciels dans l'appareil portatif.

Des langages intermédiaires de programmation orientée objet ont été développés. Le but principal de ces langages est de rendre leurs logiciels indépendants du matériel sur lequel ils doivent être exécutés. Les programmeurs sont ainsi globalement dégagés des contraintes liées à des matériels spécifiques. La diffusion d'une même version de logiciel pour différents matériels est également possible. Les langages intermédiaires orientés objet tels que le pseudo-code Java (désigné par bytecode en langue anglaise) obtenu après compilation du langage source Java ont ainsi connu un essor conséquent.

Un logiciel Java pour un ordinateur de bureau est classiquement diffusé sous forme d'un ensemble de modules constitué de fichiers .class. Ces fichiers correspondent à une forme compilée du logiciel. Chaque fichier compilé correspond à une structure de données de type classe et comprend en tant que telle les informations de cette classe : à savoir, la description des éléments de la classe (ses constantes, ses champs, ses méthodes), la description des éléments utilisés par la classe et définis dans d'autres classes (des champs et des méthodes), le code des méthodes de la classe sous forme d' instructions interprétables (pseudo-code) par l'interpréteur de la machine virtuelle Java. Dans un fichier class les descriptions des éléments de la classe et des éléments utilisés par la classe sont regroupés dans une table de références (constant pool) associant notamment des symboles numériques (leur numéro d'entrée dans le constant pool) à des descriptions d'éléments. Ainsi dans les instructions interprétables (pseudo-code) les références aux éléments de la classe et aux éléments utilisés par la classe se retrouvent « référencés » sous la forme de leur numéro d'entrée dans la table de référence (constant pool). Un fichier .class présente par exemple la structure suivante :

```
 ClassFile {
     Id_info ;               //Numéro de version
     Constant_pool ;         //Stocke toutes les références
          aux éléments de la classes et aux éléments
          utilisés par la classe
     Base_info ;             //Drapeaux d'accès, nom de
          classe et superclasse
     Interface_list :        //Interfaces mises en oeuvre par
          la classe
     Field_list ;            //Description des champs de la
          classe
     Method_list ;           //Méthodes de cette classe
          (incluant leur pseudo-code, c'est-à-dire leurs
          instructions interprétables par l'interpréteur
          de la machine virtuelle)
     Attribute_list ;        //Attributs (par exemple :
          informations de débuggage, etc...)
```

Les fichiers du programme compilé sont stockés sur une mémoire de masse de l'ordinateur, par exemple un disque dur. L'exécution du logiciel Java est réalisée par la machine virtuelle Java installée sur l'ordinateur. Cette machine virtuelle charge et transforme les informations du ClassFile en des structures de données en mémoire de travail qui sont propres à la machine virtuelle et qui permettent à cette machine virtuelle d'exécuter le logiciel.

Cette étape de chargement (et de transformation) de logiciels Java, connue notamment des documents <US-B1-6 349 344>, <EP-A-1 416 378>, <XP002252706>, <US 2003/005020 A1> et <WO 00/46666 A>, de l'art antérieur, est réalisable sur la plupart des ordinateurs de bureau présentant des ressources importantes de mémoire vive et de processeur. Ces ressources leur permettent en effet de réaliser le chargement du logiciel en créant à la volée et en mémoire vive les structures de données internes à la machine virtuelle qui permettent ainsi l'exécution du logiciel en mémoire vive. Cette étape de chargement préalable à l'exécution implique notamment une étape d'édition de liens dans laquelle on remplace dans les structures de données créées les références à des éléments internes et externes à la classe par des adresses en mémoire des structures de données ainsi crées.

Cependant, certains systèmes devant embarquer des logiciels Java ont des capacités beaucoup plus limitées qui interdisent ce mode d'exécution. Ainsi, du fait des contraintes de miniaturisation, une carte à puce comprend typiquement entre 1 et 4 KiloOctets de mémoire vive (utilisée comme mémoire de travail), entre 32 et 64 KiloOctets de mémoire non volatile réinscriptible (utilisée comme mémoire de masse et comme mémoire de travail) et environ 256 KiloOctets de mémoire morte (utilisée pour stocker le code de l'environnement d'exécution). Une telle carte à puce est donc inadaptée à ce mode de fonctionnement qui impliquerait de stocker en mémoire non volatile le fichier .class et de réaliser cette étape de chargement en mémoire volatile à chaque exécution. De plus il y aurait ainsi duplication des informations de la classes dans la carte : celles dans le .class en mémoire non volatile et celles sous forme de structures de données en mémoire volatile.

Une première solution consiste à mémoriser dans la mémoire non volatile de la carte à puce directement les structures de données définies par les spécifications de la machine virtuelle de la carte à puce. Ainsi la machine virtuelle dans la carte n'a plus à réaliser cette opération de chargement puisqu'elle reçoit directement les informations des classes dans son format de structures de données, donc prêts à être exécutés.

Le document US2003/0028686 décrit un tel procédé de chargement. Les fichiers .class sont ainsi transformés en un fichier .cap au format Java Card (marque déposée) sur une machine de chargement, ce fichier étant ensuite chargé dans la carte à puce soit lors de sa fabrication, soit ultérieurement au cours de son utilisation. Le fichier .Cap comprend notamment un entête, une table de références, un descripteur de méthode et un descripteur d'éléments externes. La machine de chargement génère également un fichier appelé ExportFile, associé au fichier .Cap généré. Ce fichier ExportFile permet de déclarer les éléments publics dans le fichier .Cap, par exemple pour que d'autres applications séparées puissent utiliser ces éléments.

Cependant, l'utilisation de cette solution présente des inconvénients. Java Card présente un jeu d'instructions réduit par rapport à Java. Java Card ne supporte notamment pas le chargement dynamique de classes. L'édition dynamique de liens est limitée après le chargement du fichier .cap dans la carte à puce. Les fichiers .cap chargés ne peuvent pas être générés aisément à partir de fichiers .class faisant appel à des instructions non supportées par Java Card. De plus, l'étape de conversion complique la tâche des programmeurs puisqu'une conversion doit être prévue spécifiquement pour chaque type de carte à puce (en fonction des logiciels déjà chargés dans la carte et pour laquelle il est nécessaire d'avoir les fichiers ExportFile correspondants au moment de la conversion). Le chargement du logiciel dans la carte à puce doit également être effectué d'un bloc. Toute interruption de transmission impose la reprise du chargement depuis l'origine. Enfin, deux autres inconvénients à cette solution sont l'utilisation d'un format de fichier pour la distribution des classes qui est particulier à la carte (le .cap) et la nécessaire normalisation des structures de données internes de la machine virtuelle qui sont décrits dans le nouveau fichier .cap ainsi défini.

Une seconde solution consiste à compiler les fichiers .class lors de leur installation dans un langage natif de la carte à puce. La mémoire de travail de la carte à puce n'est alors pas occupée par une machine virtuelle et le temps d'exécution est notablement réduit. Le processus de chargement et d'édition de liens est dès lors réalisé. Le code natif ainsi généré présente des inconvénients puisqu'il occupe une place mémoire très supérieure à celle du code interprété. De plus, la compilation est complexe et coûteuse puisqu'elle doit être spécifique à la carte à puce. En outre, la sécurité de la carte à puce est amoindrie car le logiciel compilé en langage natif peut fournir des informations sur le fonctionnement de la carte.

L'invention vise à résoudre un ou plusieurs de ces inconvénients. L'invention a ainsi pour objet un procédé de chargement d'un logiciel compilé en langage intermédiaire orienté objet et comprenant plusieurs modules à charger dans la mémoire non volatile d'un appareil numérique portatif muni d'une machine virtuelle d'exécution, ces modules devant être chargés sous forme exécutable par l'interpréteur de ladite machine virtuelle, le chargement d'au moins un des modules comprenant les étapes suivantes :
- tester l'existence d'une structure de données associée à ce module dans la mémoire non volatile ; et
- si cette structure de données n'existe pas, créer une structure de données associée à ce module dans la mémoire non volatile et marquer cette structure de données comme non chargée ;
- résoudre les liens pour l'ensemble des éléments internes à ce module dans cette structure de données puis marquer cette structure de données comme chargée ;
- pour chaque autre module référencé dans le module en cours de chargement, tester l'existence d'une structure de données associée à cet autre module ;
- si une structure de données associée à cet autre module n'existait pas, créer une structure de données associée à cet autre module dans la mémoire non volatile et marquer cette structure de données comme non chargée.

Selon une variante, l'étape de création de la structure de données associée au module à charger comprend la mémorisation dans cette structure de données d'un descriptif du module à charger contenu dans ce module à charger.

Selon encore une variante, l'étape de résolution des liens comprend :
- la vérification de l'existence d'une structure de données associée à chaque élément interne ;
- si cette structure de données n'existe pas, la création d'une structure de données associée à cet élément interne dans la mémoire non volatile ;
- pour chaque élément externe mentionné dans le module en cours de chargement :
   - la vérification de l'existence d'une structure de données associée à cet élément externe;
   - si cette structure de données n'existe pas, la création d'une structure de données associée à cet élément externe dans la mémoire non volatile.

Selon une autre variante, le chargement dudit module comprend en outre, après la résolution de liens, la marquage de ce module comme lié si tous les modules externes qu'il mentionne sont marqués comme chargés.

Un test d'existence d'une structure de données peut comprendre un test de conformité entre cette structure de données si elle existe et sa référence dans le module en cours de chargement et la mémorisation d'informations de vérification de conformité ; les informations de vérification de conformité des références sont supprimées lorsque le module est marqué comme lié.

Un tel procédé peut présenter les étapes suivantes :
- les données statiques du module marqué comme lié sont initialisées ;
- ce module est marqué comme prêt à l'emploi.

Un code mémorisé dans l'appareil numérique et destiné à l'initialisation des données statiques peut alors être effacé lorsque le module est marqué comme prêt à l'emploi.

Selon une variante, les modules à charger sont des fichiers .class compilés en Java. Les structures de données sont des structures de données manipulables par la machine virtuelle. L'appareil numérique est une carte à puce embarquant une machine virtuelle du type Java ou DotNet.

On peut prévoir qu'un tel chargement de module est effectué pour l'ensemble des modules du logiciel.

Suite à l'indisponibilité d'un module, la disponibilité de ce module peut être testée pour que ce module soit automatiquement chargé par l'appareil portatif.

L'invention a aussi pour objet un chargeur d'un logiciel compilé en langage intermédiaire orienté objet comprenant plusieurs modules à charger dans un appareil numérique portatif, ce chargeur étant susceptible d'être stocké dans une mémoire non volatile de l'appareil, susceptible d'accéder aux modules mémorisés sur un appareil source et susceptible de mettre en oeuvre un procédé mentionné ci-dessus.

L'invention porte encore sur un logiciel chargé dans un appareil portatif selon un tel procédé.

L'invention porte par ailleurs sur un appareil numérique portatif comprenant une mémoire non volatile mémorisant le chargeur mentionné. Selon une variante, sa mémoire non volatile mémorise le logiciel mentionné.

Selon encore une variante, cet appareil est une carte à puce.

D'autres particularités et avantages de l'invention apparaîtront clairement à la lecture de la description faite à titre d'exemple non limitatif et en regard des dessins annexés sur lesquels :
- la figure 1 illustre un exemple de système informatique mis en oeuvre pour réaliser un chargement dans une carte à puce ;
- la figure 2 illustre des données stockées dans la mémoire non volatile de la carte à puce durant le chargement ;
- la figure 3 illustre l'évolution de l'état d'un marqueur d'une structure de données en fonction d'étape réalisées lors du chargement.

Un appareil électronique portatif désignera par la suite un appareil portatif tel qu'un ordinateur portable mais aussi tout appareil électronique doté d'un microcontrôleur réunissant un processeur et des mémoires.

L'invention propose de charger les modules du logiciel dans un appareil portatif en créant une structure de données pour des éléments mentionnés pour la première fois durant ce chargement. Ainsi, une structure de données destinée à être exécutée par la machine virtuelle de l'appareil portatif est créée directement pour les éléments externes au module en cours de chargement, sans en stocker une représentation temporaire. Les éléments inutiles à l'exécution sont effacés de la mémoire non volatile de l'appareil non portatif au fur et à mesure des étapes de chargement, édition de lien et optimisation réalisés par un chargeur de modules logiciels.

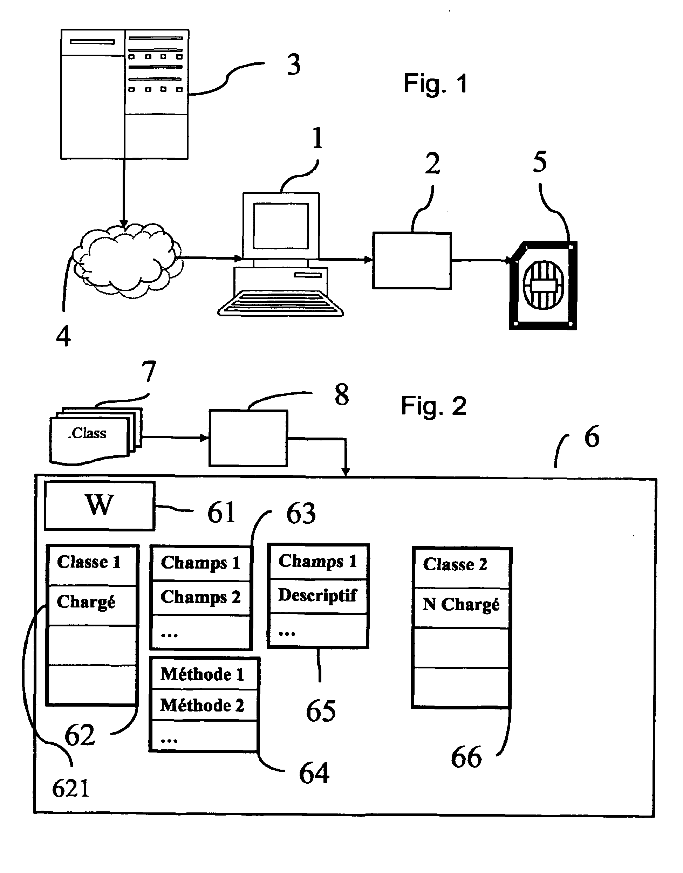

La figure 1 illustre un exemple de moyens mis en oeuvre pour charger un logiciel compilé dans une carte à puce 5 qui constitue en l'occurrence l'appareil portatif. Un ordinateur 1 est muni d'un lecteur de carte à puce 2, dans lequel est insérée la carte à puce 5. L'ordinateur 1 est par exemple connecté à un serveur 3 par l'intermédiaire d'un réseau informatique 4. Des modules d'un logiciel compilé sont laissés en téléchargement sur le .serveur 3 (par exemple sous la forme d'un ensemble de fichiers .Class pour un logiciel compilé en Java). La carte à puce 5 est munie d'une machine virtuelle pour l'exécution des logiciels chargés.

Par la suite, on détaillera plus particulièrement l'invention dans le cas d'un logiciel compilé en Java, bien que l'invention s'applique également pour des logiciels compilés dans d'autres langages intermédiaires orientés objet, tels que .Net (marque déposée).

La figure 2 illustre les données mémorisées dans la mémoire 6 de la carte à puce 5 durant le chargement des modules 7 par un chargeur 8. Le chargeur 8 est une application qui est par exemple mémorisée dans la mémoire morte de la carte à puce 5. Le chargeur 8 accède à un premier module à charger nommé Classe1. Le chargeur 8 place en mémoire de travail 61 tout ou partie de Classe1.

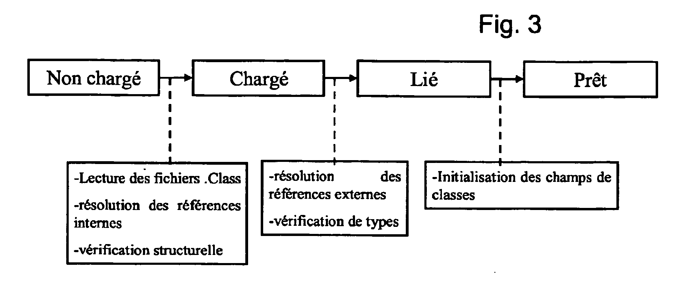

Le chargeur teste au préalable si le fichier .class est disponible (le fichier .class d'une classe à charger dynamiquement peut par exemple être associé à une adresse URL). Le chargeur teste également l'existence d'une structure de données 61 associée à Classe1 dans la mémoire non volatile. En effet, selon le procédé de chargement de l'invention, cette structure de données a pu être créée auparavant lors du chargement d'un autre module. Si la structure de données 62 associée à Classe1 n'existe pas, cette structure de données est créée dans la mémoire non volatile de la carte 5. La structure 62 comprend un marqueur 621 d'état de chargement. Le marqueur 621 est placé à l'état « non chargé » lors de la création de la structure de données. Différents états du marqueur ainsi que des étapes les séparant sont illustrés à la figure 3.

Lorsque le chargeur 8 constate que la structure de données 62 est existante et à l'état « non chargé », le chargeur résout les liens pour l'ensemble des éléments internes pour lesquels des référence sont trouvées dans Classe1. Le chargeur élimine alors des paramètres inutiles à l'exécution du logiciel ou du module Classe1 (par exemple la table de numérotation de lignes, le fichier source, les informations de débuggage...). L'espace occupé par les données mémorisées dans la mémoire non volatile de la carte est ainsi significativement réduit.

On peut envisager de ne créer qu'une structure de données par module, et d'inclure l'ensemble des données des éléments internes de ce module dans sa structure de données associée. Avantageusement, on crée une structure de données dans la mémoire non volatile pour chaque élément référencé dans un module à charger. Les structures de données sont ainsi plus faciles et rapides à manipuler, notamment pour permettre l'effacement d'un élément référencé devenu inutile suite à une édition de lien ou une optimisation.

La résolution des liens internes implique dans l'exemple la création des structures de données 63, 64 et 65 manipulables par la machine virtuelle. Ces structures de données sont soit créées durant le chargement antérieur d'un autre module (lors d'une résolution de liens externes détaillée ultérieurement), soit par le chargeur 8 ayant déterminé leur non existence durant cette résolution de liens internes. Les structures de données 63 et 64 sont des tables listant respectivement les champs internes et les méthodes dont les références apparaissent dans Classe1. La structure de données 65 correspond au descriptif d'un champ listé dans la structure de données 63. Ainsi, on peut associer une structure de données à chaque élément interne ou à chaque liste d'éléments internes.

Les structures de données sont complétées au fur et à mesure que des éléments les concernant sont effectivement chargés. Un tel chargement permet ainsi de ne mémoriser dans ces structures de données que les éléments utiles à l'exécution, en supprimant automatiquement les redondances des éléments référencés depuis plusieurs autres éléments.

Une fois cette résolution de liens effectuée, le marqueur 621 est placé à l'état « chargé ». Cette étape de résolution de liens est avantageusement utilisée pour réaliser un déboggage du module. Ainsi, cette étape d'édition de liens permettra aisément de déterminer les liens internes qui peuvent se révéler défaillants.

Un certain nombre d'informations peuvent être supprimées suite au chargement, afin d'encombrer au minimum la mémoire non volatile de l'appareil. On constate notamment que les tables de références des fichiers .class contiennent de nombreuses entrées qui sont utilisées uniquement durant le processus de chargement des modules et non durant l'exécution. Ainsi des méta-informations utilisées durant l'édition de lien peuvent être supprimées. Certains descripteurs de méthodes peuvent ainsi être supprimés une fois que l'édition de liens est réalisée pour un fichier .class. Il est, par exemple, possible d'effacer la description textuelle des éléments internes privés au module une fois l'édition des liens internes réalisés : cette description servait uniquement à réaliser cette édition de liens et ne servira plus jamais.

En outre, il est possible d'effacer la description de certains éléments internes publics (destinés à être lus par d'autres modules) si on estime qu'aucun autre module ne pourra les référencer. C'est notamment le cas lorsqu'on interdit tout chargement ultérieur de modules afin de figer l'appareil portable. L'appareil peut notamment être figé en invalidant le chargeur 8 ou en effaçant le code du chargeur 8 si celui-ci était stocké en mémoire non volatile.

Suite à l'étape de résolution des liens internes, le chargeur 8 effectue une résolution des liens pour les éléments externes référencés dans le module Classe1 en cours de chargement. Ainsi, pour chaque module externe référencé dans Classe1, on teste l'existence d'une structure de données associée. Si tel n'est pas le cas, une structure de donnée associée est créée et son marqueur est placé à l'état « non chargé ». Dans l'exemple, Classe1 fait référence au module externe Classe2. Aucune structure de données n'existant pour Classe2 avant le chargement de Classe1, l'étape de résolution des liens externes pour Classe1 implique la création de la structure de données 66.

Si une structure de données doit être créée pour chaque élément d'un module, toute référence à un élément externe dans le module en cours de chargement sera résolue. De façon similaire, une structure de données est créée pour chaque élément externe si un test détermine que la structure de données associée n'existe pas encore.

Lors de la résolution de liens pour les éléments externes, le test d'existence comprend avantageusement un test de conformité de la structure de données trouvée avec sa référence dans le module en cours de chargement. Si ce test de conformité est négatif, un message d'échec de chargement est généré. Ce test de conformité fournit des moyens de déboggage supplémentaires.

Ainsi, le chargement d'un module permet de créer au plus tôt des structures de données pour d'autres modules à charger, dans la mémoire non volatile de l'appareil portatif. De plus, les marqueurs permettent de reprendre un chargement au niveau où ce chargement aurait pu être interrompu. Un tel chargement permet de charger seulement certains modules, avant que des modules associés ne soient disponibles. L'invention permet donc de faire évoluer dynamiquement les structures de données des modules au fur et à mesure de leur chargement.

Lorsque les liens de l'ensemble des références externes du module à charger ont été résolues, le marqueur de sa structure de données est placé à l'état « lié ».

Ensuite, les données statiques de ce module lié sont initialisées. Le marqueur de sa structure de données est alors placé dans l'état «prêt ». Ce module est dès lors dans la mémoire non volatile de l'appareil portatif et prêt à l'emploi. Un code mémorisé dans l'appareil portatif et destiné à l'initialisation des données statiques est effacé lorsque la structure de données est à l'état « prêt » afin de réduire l'espace occupé en mémoire. Lorsque le marqueur de la structure de données est placé à l'état « prêt », les éléments du module placés en mémoire de travail peuvent être effacés pour libérer de la place dans l'appareil numérique.

L'homme du métier saura définir une séquence de chargement appropriée des modules successifs d'un logiciel compilé. Le chargeur 8 peut notamment mémoriser les modules non chargés pour lesquels des structures de données ont été créées, puis réaliser successivement leur chargement. Le chargeur 8 peut également ne charger que les modules qui lui sont soumis.

Suite à une indisponibilité d'un module à charger, le chargeur peut également effectuer des tests de disponibilité répétés et charger automatiquement ce module dès que possible.

Du fait de l'espace libéré en mémoire non volatile, une machine virtuelle Java standard capable de charger des ficiers .class peut être mémorisée dans la carte à puce. Un développeur pourra alors diffuser un même logiciel pour les appareils portatifs et les ordinateurs de bureau. Le développeur disposera également des éléments de bibliothèque de son choix. Contrairement à la programmation en JavaCard, le développeur n'a pas à récupérer au préalable des fichiers du type Exportfile.

## Revendications

1. Procédé de chargement d'un logiciel compilé en langage intermédiaire orienté objet et comprenant plusieurs modules (7) à charger dans la mémoire non volatile (6) d'un appareil numérique portatif (5) muni d'une machine virtuelle d'exécution, ces modules (7) devant être chargés sous forme exécutable par l'interpréteur de ladite machine virtuelle,
le chargement d'au moins un des modules comprenant l'étape de
- tester l'existence d'une structure de données associée à ce module dans la mémoire non volatile (6) ;
**caractérisé en ce que** le chargement de ce module comprend les étapes suivantes :
- si cette structure de données n'existe pas, créer une structure de données (62) associée à ce module dans la mémoire non volatile (6) et marquer cette structure de données comme non chargée ;
- résoudre les liens pour l'ensemble des éléments internes à ce module dans cette structure de données puis marquer cette structure de données comme chargée (621) ;
- pour chaque autre module référencé dans le module en cours de chargement, tester l'existence d'une structure de données associée à cet autre module ;
- si une structure de données associée à cet autre module n'existait pas, créer une structure de données (66) associée à cet autre module dans la mémoire non volatile et marquer cette structure de données comme non chargée,
**en ce que** chacune des structures de données est directement créée dans la mémoire non volatile (6),
et **en ce que** chacune des structures de données comprend un marqueur (621) placé à l'état « non chargé » lors de la création de la structure de données, placé à l'état « chargé » une fois que l'étape de résolution des liens est effectuée, placé à l'état « lié » lorsque les liens de l'ensemble des références externes du module à charger ont été résolues et placé à l'état « prêt » lorsque les données statiques de ce module sont initialisées.

2. Procédé selon la revendication 1, **caractérisé en ce que** l'étape de création de la structure de données associée au module à charger comprend la mémorisation dans cette structure de données d'un descriptif du module à charger contenu dans ce module à charger.

3. Procédé selon la revendication 1 ou 2, **caractérisé en ce que** :
- l'étape de résolution des liens comprend :
- la vérification de l'existence d'une structure de données associée à chaque élément interne ;
- si cette structure de données n'existe pas, la création d'une structure de données (64, 65) associée à cet élément interne dans la mémoire non volatile ;
- pour chaque élément externe mentionné dans le module en cours de chargement :
- la vérification de l'existence d'une structure de données associée à cet élément externe;
- si cette structure de données n'existe pas, la création d'une structure de données associée à cet élément externe dans la mémoire non volatile.

4. Procédé selon l'une quelconque des revendications précédentes, **caractérisé en ce que** le chargement dudit module comprend en outre, après la résolution de liens, la marquage de ce module comme lié si tous les modules externes qu'il mentionne sont marqués comme chargés.

5. Procédé selon la revendication 4, **caractérisé en ce que**:
- un test d'existence d'une structure de données comprend un test de conformité entre cette structure de données si elle existe et sa référence dans le module en cours de chargement et la mémorisation d'informations de vérification de conformité ;
- les informations de vérification de conformité des références sont supprimées lorsque le module est marqué comme lié.

6. Procédé selon la revendication 4 ou 5, **caractérisé en ce qu'**il comprend en outre les étapes suivantes :
- les données statiques du module marqué comme lié sont initialisées ;
- ce module est marqué comme prêt à l'emploi.

7. Procédé selon la revendication 6, **caractérisé en ce qu'**un code mémorisé dans l'appareil numérique et destiné à l'initialisation des données statiques est effacé lorsque le module est marqué comme prêt à l'emploi.

8. Procédé selon l'une quelconque des revendications précédentes, **caractérisé en ce que** les modules à charger sont des fichiers compatibles avec la structure « Clasfile » définie dans les spécifications de la machine virtuelle JAVA.

9. Procédé selon la revendication 8, **caractérisé en ce que** les structures de données sont des structures de données manipulables par la machine virtuelle.

10. Procédé selon la revendication 8 ou 9, **caractérisé en ce que** l'appareil numérique (5) est une carte à puce embarquant une machine virtuelle du type Java ou DotNet.

11. Procédé selon l'une quelconque des revendications précédentes, **caractérisé en ce que** ledit chargement de module est effectué pour l'ensemble des modules du logiciel.

12. Procédé selon l'une quelconque des revendications précédentes, **caractérisé en ce que**, suite à l'indisponibilité d'un module, la disponibilité de ce module est testée et ce module est automatiquement chargé par l'appareil portatif.

## Claims

1. A method for loading software compiled into an intermediate object oriented language and comprising several modules (7) for loading into the non-volatile memory of a portable digital device (5) equipped with a virtual execution machine, these modules (7) needing to be loaded in a form that can be executed by the interpreter of said virtual machine,
with the loading of at least one of the modules comprising the following steps:
- checking for the existence of a data structure associated with this module in the non-volatile memory (6);
**characterized in that** the loading of such module includes the following steps:
- if this data structure does not exist, creating a data structure (62) associated with this module in the non-volatile memory (6) and marking this data structure as not loaded;
- resolving the links for all the internal elements of this module in this data structure then marking this data structure as loaded (621);
- for every other module referenced in the module being loaded, checking for the existence of a data structure associated with this other module;
- if a data structure associated with this other module did not exist, creating a data structure (66) associated with this other module in the non-volatile memory and marking this data structure as not loaded,
**in that** each one of the data structures is directly created in the non-volatile memory (6),
and **in that** each one of the data structures includes a marker (621) positioned in the "not loaded" condition upon creation of the data structure, positioned in the "loaded" condition once the step of resolving the links is carried out, positioned in the "linked" condition when the links of all the external references of the module to be loaded are resolved and positioned in the "ready" condition when the static data of such module are initialized.

2. A method according to claim 1, **characterised in that** the step of creating the data structure associated with the module to be loaded comprises the storage in this data structure of a descriptor of the module to be loaded contained within this module to be loaded.

3. A method according to claim 1 or 2, **characterised in that**:
- the step of resolving the links comprises:
- verifying the existence of a data structure associated with each internal element;
- if this data structure does not exist, creating a data structure (64, 65) associated with this internal element in the non-volatile memory;
- for each external element mentioned in the module being loaded:
- verifying the existence of a data structure associated with this external element;
- if this data structure does not exist, creating a data structure associated with this external element in the non-volatile memory.

4. A method according to any one of the preceding claims, **characterised in that** the loading of said module also comprises, after the link resolution, the marking of this module as linked if all the external modules it mentions are marked as loaded.

5. A method according to claim 4, **characterised in that**:
- a check for the existence of a data structure comprises a conformity test between this data structure, if it exists, and its reference in the module being loaded and the storage of conformity check information;
- the conformity check information of the references is deleted when the module is marked as linked.

6. A method according to claim 4 or 5, **characterised in that** it also comprises the following steps:
- initialising the static data of the module marked as linked;
- marking this module as ready for use.

7. A method according to claim 6, **characterised in that** a code stored in the digital device and intended to initialise static data is deleted once the module is marked as ready for use.

8. A method according to any one of the preceding claims, **characterised in that** the modules to be loaded are files supported by the "Clasfile" structure defined in the specifications of the Java virtual machine.

9. A method according to claim 8, **characterised in that** the data structures are data structures that can be handled by the virtual machine.

10. A method according to claim 8 or 9, **characterised in that** the digital device (5) is a chip card with an embedded Java or DotNet virtual machine.

11. A method according to any one of the preceding claims, **characterised in that** said module loading is carried out for all the program modules.

12. A method according to any one of the preceding claims, **characterised in that**, following the unavailability of a module, the availability of this module is checked and this module is automatically loaded by the portable device.

## Patentansprüche

1. Verfahren zum Laden von Software in einer kompilierten objektorientierten Sprache, die aus mehreren Modulen (7) besteht, die in den nicht flüchtigen Speicher (6) eines tragbaren Digitalgeräts (5) geladen werden soll, das eine virtuelle Ausführungsmaschine umfasst, wobei diese Module (7) in einer Form geladen werden sollen, die vom Interpreter der genannten virtuellen Maschine ausführbar ist,
wobei das Laden mindestens eines der Module den folgenden Schritt umfasst:
- Testen des Vorhandenseins einer diesem Modul zugeordneten Datenstruktur im nicht flüchtigen Speicher (6);
**dadurch gekennzeichnet, dass** das Laden dieses Moduls die folgenden Schritte umfasst:
- besteht diese Datenstruktur nicht, Erstellung einer diesem Modul zugeordneten Datenstruktur (62) im nicht flüchtigen Speicher (6) und Kennzeichnung dieser Datenstruktur als nicht geladen;
- in dieser Datenstruktur die Links auflösen für sämtliche internen Elemente dieses Moduls, dann diese Datenstruktur als geladen (621) kennzeichnen;
- für jedes andere im gerade geladenen Modul vorhandene Element das Vorhandensein einer diesem anderen Modul zugeordneten Datenstruktur testen;
- sollte eine diesem anderen Modul zugeordnete Datenstruktur nicht vorhanden sein, eine diesem anderem Modul zugeordnete Datenstruktur (66) im nicht flüchtigen Speicher erstellen und diese Datenstruktur als nicht geladen kennzeichnen,
dass jede dieser Datenstrukturen direkt im nicht flüchtigen Speicher (6) erstellt wird,
und dass jede dieser Datenstrukturen ein Kennzeichen (621) aufweist, das bei der Erstellung der Datenstruktur in den Status "nicht geladen" gesetzt wird, und in den Status "geladen", wenn der Auflösungsschritt der Links durchgeführt wurde, sowie in den Status "mit Link", wenn die Links aller außerhalb des zu ladenden Moduls genannten Elemente aufgelöst worden sind, und dann in den Statut "bereit", wenn die statischen Daten dieses Moduls initialisiert werden.

2. Verfahren gemäß Anspruch 1, **dadurch gekennzeichnet, dass** der Erstellungsschritt der dem zu ladenden Modul zugeordneten Datenstruktur das Abspeichern in dieser Datenstruktur einer Beschreibung des zu ladenden Moduls umfasst, die in diesem zu ladenden Modul enthalten ist.

3. Verfahren gemäß Anspruch 1 oder 2, **dadurch gekennzeichnet, dass**:
- der Auflösungsschritt der Links folgendes umfasst:
. die Prüfung des Vorhandenseins einer jedem internen Element zugeordneten Datenstruktur;
. wenn diese Datenstruktur nicht vorhanden ist, die Erstellung einer diesem internen Element zugeordneten Datenstruktur (64, 65) im nicht flüchtigen Speicher;
- für jedes externe, im gerade geladenen Module genannte Element:
. die Prüfung des Vorhandenseins einer diesem externen Element zugeordneten Datenstruktur;
. wenn diese Datenstruktur nicht vorhanden ist, die Erstellung einer diesem externen Element zugeordneten Datenstruktur im nicht flüchtigen Speicher.

4. Verfahren gemäß einem der vorangehenden Ansprüche, **dadurch gekennzeichnet, dass** das Laden des genannten Moduls ferner, nach der Auflösung der Links, die Kennzeichnung dieses Moduls als ,mit Link' umfasst, wenn alle genannten externen Module als geladen gekennzeichnet sind.

5. Verfahren gemäß Anspruch 4, **dadurch gekennzeichnet, dass**:
- ein Test auf Vorhandensein einer Datenstruktur einen Konformitätstest zwischen dieser Datenstruktur, wenn sie vorhanden ist, und ihrer Referenz in dem gerade geladenen Modul umfasst, sowie das Abspeichern von Informationen über die Konformitätsprüfung;
- die Informationen über die Konformitätsprüfung der Referenzen gelöscht werden, wenn das Modul als ,mit Link' gekennzeichnet wird.

6. Verfahren gemäß Anspruch 4 oder 5, **dadurch gekennzeichnet, dass** es ferner die folgenden Schritte umfasst:
- die als ,mit Link' gekennzeichneten statischen Daten des Moduls werden initialisiert;
- dieses Moduls wird als ,einsatzbereit' gekennzeichnet.

7. Verfahren gemäß Anspruch 6, **dadurch gekennzeichnet, dass** ein im Digitalgerät gespeicherter Code, der zur Initialisierung der statischen Daten dient, gelöscht wird, wenn das Modul als ,einsatzbereit' gekennzeichnet ist.

8. Verfahren gemäß einem der vorangehenden Ansprüche, **dadurch gekennzeichnet, dass** es sich bei den zu ladenden Modulen um Dateien handelt, die kompatibel sind mit der Struktur "Clasfile", die in den Spezifikationen der virtuellen Maschine JAVA definiert ist.

9. Verfahren gemäß Anspruch 8, **dadurch gekennzeichnet, dass** es sich bei den Datenstrukturen um Datenstrukturen handelt, die von der virtuellen Maschine bearbeitet werden können.

10. Verfahren gemäß Anspruch 8 oder 9, **dadurch gekennzeichnet, dass** das Digitalgerät (5) eine Chipkarte mit integrierter virtueller Maschine vom Typ Java oder DotNet ist.

11. Verfahren gemäß einem der vorangehenden Ansprüche, **dadurch gekennzeichnet, dass** das genannte Modulladen für sämtliche Module der Software durchgeführt wird.

12. Verfahren gemäß einem der vorangehenden Ansprüche, **dadurch gekennzeichnet, dass** aufgrund der Nichtverfügbarkeit eines Moduls die Verfügbarkeit dieses Moduls getestet und dieses Modul automatisch vom tragbaren Gerät geladen wird.
